# EUROPEAN PATENT APPLICATION

(11) **EP 3 750 859 A1**
(43) Date of publication of application: **16.12.2020**
(21) Application number: 19772354.7
(22) Date of filing: 19.02.2019
(51) Int. Cl.: C04B 35/453, C01G 29/00, C01G 33/00, C01G 35/00, C04B 35/495, C25B 13/04, G01N 27/02, H01B 1/06, H01B 1/08, H01M 8/1246, H01M 8/1253, H01M 8/12

(54) **OXIDE IONIC CONDUCTOR AND ELECTROCHEMICAL DEVICE**

(30) Priority: 20.03.2018 JP 2018052848
(71) Applicant: Kabushiki Kaisha Toyota Chuo Kenkyusho, Nagakute-shi, Aichi 480-1192 (JP)
(72) Inventor: MATSUBARA Masato, Nagakute-shi, Aichi 480-1192 (JP); SUZUMURA Akitoshi, Nagakute-shi, Aichi 480-1192 (JP); TAJIMA Shin, Nagakute-shi, Aichi 480-1192 (JP); OHBA Nobuko, Nagakute-shi, Aichi 480-1192 (JP); KAJITA Seiji, Nagakute-shi, Aichi 480-1192 (JP); ASAHI Ryoji, Nagakute-shi, Aichi 480-1192 (JP)
(74) Representative: Kramer Barske Schmidtchen Patentanwälte PartG mbB
(86) International application number: PCT/JP2019/005954
(87) International publication number: WO 2019/181323

(57) **Abstract**

An oxide ion conductor includes an oxide having a composition expressed by Biₓ(Nb_{1-a-b}TaₐA_{b})_{1-x-c}B_{c}O_{δ}, where A is at least one element selected from a group consisting of Ti, Zr, and Ga, B is one or at least two of group II elements, 0 < x ≤ 0.8, 0 ≤ a ≤ 1.0, 0 ≤ b ≤ 0.1, and 0 < c < 0.8 are satisfied, and δ is a value securing electrical neutrality. The oxide ion conductor preferably satisfies 0.2 ≤ x ≤ 0.8, 0 < a < 1.0, 0 ≤ b ≤ 0.1, and 0.1 ≤ c ≤ 0.6. An electrochemical device includes such an oxide ion conductor.

## Description

### FIELD OF THE INVENTION

The present invention relates to oxide ion conductors and electrochemical devices, more specifically relates to a novel oxide ion conductor having a composition expressed by a general formula Biₓ(Nb_{1-a-b}TaₐA_{b})_{1-x-c}B_{c}O_{δ}, and relates to an electrochemical device including the oxide ion conductor.

### BACKGROUND OF THE INVENTION

The term "oxide ion conductor" refers to a solid material in which oxide ion (O²⁻) preferentially diffuses. The oxide ion conductor is used as a solid electrolyte of an electrochemical device such as a solid-oxide fuel cell (SOFC), an oxygen gas sensor, and an exhaust gas purification element using an electrochemical reaction. Yttria-stabilized zirconia (YSZ) containing about 8 mol% Y₂O₃ is currently widely used as the oxide ion conductor.

YSZ exhibits high oxide ion conductivity of 10⁻² S/cm or more at a high temperature (700°C or higher) (Nonpatent Literature 1), and is used at an operating temperature of around 1000°C. However, there is a demand for lowering operating temperature of electrochemical devices in light of suppressing deterioration of a peripheral member or improving energy utilization efficiency. In particular, there is a great demand for a material having high oxide ion conductivity in an intermediate temperature range from 300 to 500°C.

Bismuth oxide has been known as a material exhibiting ion conductivity higher than that of YSZ at a low temperature, and there are many study examples on multicomponent ion conductors of bismuth oxide and another oxide (for example, see Nonpatent Literature 2). Pure bismuth oxide sequentially phase-transitions with an increase in temperature, and exhibits high ion conductivity in a high-temperature phase (fluorite structure). A small amount (less than 20 at%) of a rare earth element, Nb, or W is effectively added to bismuth oxide to lower the phase transition temperature, resulting in high ion conductivity. A combination of Nb and a rare earth element achieves particularly high ion conductivity. However, the rare earth element is expensive and desirably replaced with an inexpensive element.

In a material system doped with an alkaline-earth metal element, high ion conductivity is also exhibited while a crystal structure different from the fluorite structure is stabilized.

Even in a composition having a relatively small content of bismuth, for example, Bi₄V₂O₁₁ (Bi content of 67%), high ion conductivity is also exhibited through acceptor doping (see Nonpatent Literature 3). However, a composition having a large content of bismuth oxide has poor reduction resistance and/or poor stability. A composition having a smaller content of bismuth oxide improves stability but reduces ion conductivity.

### [Citation List]

### [Nonpatent Literature]

Nonpatent Literature 1: P. J. Gellings and H. Bouwmeester, Handbook of solid state electrochemistry (CRC press, 1997), pp. 196.
Nonpatent Literature 2: Solid State Ionics 89 (1996) 179.
Nonpatent Literature 3: Journal of Power Sources, 339(2017)103.

### SUMMARY OF THE INVENTION

An object of the present invention is to provide a novel oxide ion conductor that can be operated at a low temperature.

Another object of the present invention is to provide a novel oxide ion conductor exhibiting ion conductivity higher than that of YSZ at 700°C or lower.

Still another object of the present invention is to provide an electrochemical device including such an oxide ion conductor.

To achieve the object, an oxide ion conductor according to the present invention includes an oxide having a composition expressed by Formula (1)

Biₓ(Nb_{1-a-b}TaₐA_{b})_{1-x-c}B_{c}O_{δ} ··· (1)

where
A is at least one element selected from a group consisting of Ti, Zr, and Ga,
B is one or at least two of group II elements,
0 < x ≤ 0.8, 0 ≤ a ≤ 1.0, 0 ≤ b ≤ 0.1, and 0 < c < 0.8 are satisfied, and
δ is a value securing electrical neutrality.

An electrochemical device according to the present invention is summarized by including the oxide ion conductor of the present invention.

As well known, when a Bi-based oxide having a high Bi content (x ≥ 0.8) is doped with a group II element such as Ca, a crystal structure of the oxide is changed to an orthorhombic. When such a Bi-based oxide containing the group II element is further slightly doped with Ta and/or Nb, a fluorite structure favorable for ion conduction is stabilized.

Nb and Ta each act as a donor ion and thus decrease the amount of oxygen deficiency and reduce ion conductivity. On the other hand, the group II element acts as an acceptor. Simultaneous doping of Nb and/or Ta and the group II element therefore increases the amount of oxygen deficiency while the fluorite structure is maintained, leading to improvement in ion conductivity.

A Bi-based oxide having a low Bi content (x ≤ 0.4) composition may have a Bi layered compound structure. In such a case, when the oxide is simultaneously doped with Ta, Nb, and the group II element while Ta is partially replaced with another element such as Zr or Ga, the oxide also exhibits high ion conductivity.

### BRIEF DESCRIPTION OF THE DRAWINGS

FIG. 1 is ion conductivity at 700°C of yttria-stabilized zirconia (8 mol% Y₂O₃) ;
FIG. 2 is composition dependence of ion conductivity at 700°C of Biₓ(Nb_{1-a-b}TaₐA_{b})_{1-x-c}B_{c}O_{δ}, where x = 0.8 (Bi: 80 at%);
FIG. 3 is composition dependence of ion conductivity at 600°C of Biₓ(Nb_{1-a-b}TaₐA_{b})_{1-x-c}B_{c}O_{δ}, where x = 0.8 (Bi: 80 at%);
FIG. 4 is composition dependence of ion conductivity at 700°C of Biₓ(Nb_{1-a-b}TaₐA_{b})_{1-x-c}B_{c}O_{δ}, where x = 0.6 (Bi: 60 at%);
FIG. 5 is composition dependence of ion conductivity at 700°C of Biₓ(Nb_{1-a-b}TaₐA_{b})_{1-x-c}B_{c}O_{δ}, where x = 0.4 (Bi: 40 at%); and
FIG. 6 is composition dependence of ion conductivity at 700°C of Biₓ(Nb_{1-a-b}TaₐA_{b})_{1-x-c}B_{c}O_{δ}, where x = 0.2 (Bi: 20 at%) .

### DETAILED DESCRIPTION

One embodiment of the present invention will now be described in detail.

### [1. Oxide Ion Conductor]

The oxide ion conductor according to the present invention includes an oxide having a composition expressed by Formula (1).

Biₓ(Nb_{1-a-b}TaₐA_{b})_{1-x-c}B_{c}O_{δ} ··· (1)

where
A is at least one element selected from a group consisting of Ti, Zr, and Ga,
B is one or at least two of group II elements,
0 ≤ x ≤ 0.8, 0 ≤ a ≤ 1.0, 0 ≤ b ≤ 0.1, and 0 < c < 0.8 are satisfied, and
δ is a value securing electrical neutrality.

### [1.1. Crystal Structure]

The oxide ion conductor according to the present invention has a crystal structure such as the fluorite structure or the Bi layered compound structure depending on compositions.

In the present invention, the oxide ion conductor may have any crystal structure without limitation. Although the fluorite structure is advantageous for achieving high ion conductivity, another crystal structure (for example, Bi layered compound structure) may provide ion conductivity higher than that of YSZ depending on compositions.

The oxide ion conductor may not have a single phase but have a mixed phase of the Bi-based oxide having the composition expressed by Formula (1) and another phase (for example, Bi₂O₃).

### [1.2. Composition]

### [1.2.1. Element A]

The element A is to be substituted for Nb or Ta, and can be added as needed. In the present invention, the element A includes Ti, Zr, and Ga, and may be one or at least two of such elements.

Any of the elements Ti, Zr, and Ga has an ion radius similar to that of Nb or Ta. While Nb and Ta are each a pentavalent element, Ti and Zr are each a tetravalent element, and Ga is a trivalent element. Hence, when Nb and/or Ta is partially replaced with the element A, oxygen deficiency is generated, leading to high ion conductivity.

### [1.2.2. Element B]

The element B is a group II element (Be, Mg, Ca, Ba, Sr, or Ra). In the present invention, the element B is an essential element, and may be one or at least two of the above elements.

As well known, when a Bi-based oxide having a high Bi content is doped with a group II element such as Ca, a crystal structure of the oxide is changed to an orthorhombic. When the Bi-based oxide doped with Ca is further slightly doped with Nb and/or Ta, a fluorite structure favorable for ion conduction is stabilized.

Nb and Ta each act as a donor ion and decreases the amount of oxygen deficiency in the Bi-based oxide and reduces ion conductivity. On the other hand, the group II element acts as an acceptor. Hence, simultaneous doping of Nb and/or Ta and the group II element increases the amount of oxygen deficiency while the fluorite structure is maintained, leading to improvement in ion conductivity.

### [1.2.3. x]

The subscript x represents the amount of Bi contained in the oxide. In the present invention, Bi is an essential element. That is, x must be larger than 0. In general, a higher Bi content tends to improve ion conductivity. The subscript x is preferably 0.2 or more, more preferably 0.4 or more, and even more preferably 0.6 or more.

On the other hand, excessive Bi content deteriorates mechanical strength or chemical stability. Hence, x must be 0.8 or less.

### [1.2.4. a]

The subscript "a" represents the amount of Ta substituted for Nb. In the present invention, at least one of Nb and Ta is an essential element. That is, "a" may be 0. In general, when Nb is partially replaced with Ta, ion conductivity is improved. Although the reason for this is not known in detail, experimental facts reveal that ion conductivity improves with an increase in the Ta content. The subscript "a" is preferably more than 0, and more preferably 0.2 or more.

In the present invention, Ta may be exclusively contained. That is, "a" may be 1.0 or less. However, excessive Ta content requires heating at a high temperature in production of the oxide ion conductor. In addition, material cost of Ta is high compared with Nb. Hence, "a" is preferably less than 1.0. The subscript "a" is preferably 0.8 or less, and more preferably 0.6 or less.

### [1.2.5. b]

The subscript b represents the amount of the element A substituted for Nb or Ta. In the present invention, the element A is not an essential element. That is, b may be 0 or more. In general, a higher content of the element A increases the amount of oxygen deficiency, leading to higher ion conductivity. The subscript b is preferably 0.005 or more, and more preferably 0.01 or more.

On the other hand, an excessive content of the element A results in an excessive amount of oxygen deficiency, and thus ion conductivity is rather reduced. In addition, the undissolved element A may be precipitated, causing a reduction in ion conductivity. Hence, b must be 0.1 or less. The subscript b is preferably 0.04 or less, and more preferably 0.03 or less.

### [1.2.6. c]

The subscript c represents the content of the element B. In the present invention, the element B is an essential element. That is, c must be more than 0. In general, a higher B content tends to improve ion conductivity. The subscript c is preferably 0.1 or more, and more preferably 0.3 or more.

On the other hand, an excessive B content deteriorates chemical stability. Hence, c must be less than 0.8. The subscript c is preferably less than 0.72, more preferably 0.6 or less, and even more preferably 0.5 or less.

### [1.2.7. δ]

The subscript δ is a value securing electrical neutrality. δ is ideally determined by a type and amount of a relevant element. Bi is a trivalent element, Ni and Ta are each a pentavalent element, and the element B is a divalent element. Hence, when a tetravalent element is used as the element A, δ is ideally expressed by Formula (2). However, an actual value of δ may be slightly deviated from Formula (2). 3x + 5(1 - b)·(1 - x - c) + 4b·(1 - x - c) + 2c = 2δ ··· (2)

### [1.3. Specific Example]

### [1.3.1. First Specific Example]

A first specific example of the oxide ion conductor satisfies 0.2 ≤ x ≤ 0.8, 0 < a < 1.0, 0 ≤ b ≤ 0.1, and 0.1 ≤ c ≤ 0.6. The oxide ion conductor within such a composition range may have the fluorite structure or another structure (for example, Bi layered oxide structure) . The oxide ion conductor preferably has the fluorite structure to exhibit high ion conductivity.

Using the Bi-based oxide at a high temperature gradually reduces ion conductivity. On the other hand, simultaneous doping of Ca and Nb and/or Ta suppresses such time degradation while high ion conductivity is maintained. When an oxide is of a material system that can be sintered at 1500°C or lower, the oxide allows low temperature sintering. Hence, the oxide can be sintered while being assembled to another member to reduce manufacturing cost.

The oxide ion conductor within the above composition range can exhibit higher ion conductivity than YSZ at a low temperature of 700°C or lower.

### [1.3.2. Second Specific Example]

A second specific example of the oxide ion conductor satisfies 0.6 < x ≤ 0.8, 0 < a < 1.0, b = 0, and 0 < c < 0.2. The oxide ion conductor within such a composition range may have the fluorite structure or another structure (for example, Bi layered oxide structure). The oxide ion conductor preferably has the fluorite structure to exhibit high ion conductivity.

The oxide ion conductor in a composition range of the Bi content of about 60 to 80% exhibits ion conductivity (>10⁻² S/cm at 500°C) higher than the ion conductivity (10⁻² to 10⁻³ S/cm at 700°C) of ZrO₂ (yttria-stabilized zirconia: YSZ) being a typical oxide ion conductor.

The oxide ion conductor within that composition range can exhibit ion conductivity about one digit higher than the ion conductivity of YSZ.

### [1.3.3. Third Specific Example]

A third specific example of the oxide ion conductor satisfies 0.4 < x ≤ 0.6, 0 < a ≤ 0.5, b = 0, and 0 < c < 0.4. The oxide ion conductor within such a composition range may have a structure (for example, Bi layered oxide structure) other than the fluorite structure. The oxide ion conductor preferably has the fluorite structure to exhibit high ion conductivity.

The oxide ion conductor in a composition range of the Bi content of about 40 to 60% exhibits ion conductivity (4 × 10⁻³ S/cm) that is similar to the ion conductivity of YSZ at 700°C while being low compared with a Bi excess composition.

The oxide ion conductor within that composition range has relatively high chemical stability while maintaining high ion conductivity.

### [1.3.4. Fourth Specific Example]

A fourth specific example of the oxide ion conductor satisfies 0.2 < x ≤ 0.4, 0.2 < a ≤ 0.8, b = 0, and 0.3 < c ≤ 0.5.

A composition range of the Bi content of about 20 to 40% provides ion conductivity that is relatively high (1.0 × 10⁻³ S/cm at 700°C) while being low compared with a Bi excess composition.

The oxide ion conductor within such a composition range has slightly higher ion conductivity than YSZ and has relatively high mechanical stability and chemical stability.

### [1.3.5. Fifth Specific Example]

A fifth specific example of the oxide ion conductor satisfies 0 < x ≤ 0.2, 0 < a ≤ 0.8, b = 0, and 0.4 < c < 0.72. The oxide ion conductor within such a composition range may have a structure (for example, Bi layered oxide structure) other than the fluorite structure. The oxide ion conductor preferably has the fluorite structure to exhibit high ion conductivity.

The oxide ion conductor within that composition range has lower ion conductivity than YSZ, but has relatively high chemical stability and exhibits relatively high ion conductivity of about 10⁻³ S/cm at a low temperature of 700°C.

### [1.3.6. Sixth Specific Example]

A sixth specific example of the oxide ion conductor satisfies 0.4 < x ≤ 0.44, 0 ≤ a ≤ 0.8, 0 < b ≤ 0.04, and c = 0.2. The oxide ion conductor within such a composition range has a structure (for example, Bi layered oxide structure) other than the fluorite structure, but exhibits high ion conductivity even having the Bi layered oxide structure.

The oxide ion conductor within the composition range has lower ion conductivity than YSZ, but has relatively high chemical stability and exhibits relatively high ion conductivity of about 10⁻³ S/cm at a low temperature of 700°C.

### [1.4. Ion Conductivity]

The oxide ion conductor according to the present invention having an optimized composition exhibits high ion conductivity. Specifically, the oxide ion conductor having the optimized composition exhibits ion conductivity of 1 × 10⁻³ S/cm or more at 700°C.

Further, the oxide ion conductor according to the present invention having the optimized composition exhibits higher ion conductivity at 700°C or lower than that of ZrO₂ containing 8 mol% Y₂O₃.

### [1.5. Application]

The oxide ion conductor according to the present invention can be used for solid electrolytes of various electrochemical devices. Examples of the electrochemical devices, to which the present invention is applied, include the following.
(a) Solid-oxide fuel cell (SOFC).
(b) Oxygen gas sensor.
(c) Exhaust gas purification element.
(d) Solid-oxide electrolysis cell (SOEC).

### [2. Method for Manufacturing Oxide Ion Conductor]

The oxide ion conductor according to the present invention can be manufactured by
(a) mixing raw materials into a predetermined composition,
(b) calcinating the raw material mixture under a predetermined condition, and
(c) appropriately pulverizing the calcinated powder, and then forming and sintering the pulverized, calcinated powder.

The manufacturing conditions are preferably optimally selected in accordance with a target composition without limitation.

### [3. Effect]

YSZ is now widely used as the solid electrolyte used for the electrochemical devices such as SOFC. However, YSZ has the following difficulties.
(a) Ion conductivity is still insufficient.
(b) Activation energy for conduction is relatively high (about 100 kJ/mol), and thus ion conductivity drastically decreases at less than 700°C.
(c) Since YSZ is in general used at a high temperature of about 800 to 1000°C, a peripheral member of YSZ must include a material that has high heat resistance and does not react with YSZ in an operating temperature range and has a thermal expansion coefficient similar to that of YSZ.
(d) YSZ must be sintered at a high temperature.

Specifically, YSZ is typically sintered at about 1500°C and is thus necessary to be formed into a predetermined shape after sintering before being joined to another member. This makes it difficult to reduce manufacturing cost.

To overcome such difficulties, there are provided some methods for lowering the operating temperature of the electrochemical device. For example, the methods for lowering the operating temperature of SOFC include:
(a) forming an electrolyte into an extremely thin film;
(b) decreasing overvoltage using a high-performance electrode; and
(c) developing a novel material having a high ion conductivity.

Of these, the method of forming an electrolyte into a thin film and the method of exploring an electrode material are each not an essential solution. Although the scandia (Sc₂O₃)-stabilized zirconia (ScSZ), the lanthanum gallate (LaGaO₃)-based electrolyte, and the ceria-based electrolyte are proposed as electrolytes other than the YSZ, any of such electrolytes is less successful due to low strength, low redox resistance, or high cost.

On the other hand, the Bi-based oxide doped with a rare earth element exhibits high ion conductivity. However, the rare earth element is expensive and desirably replaced with an inexpensive element. In addition, a composition containing a high Bi content leads to poor stability. A composition containing a lower Bi content improves stability but does not lead to high ion conductivity.

In contrast, as well known, when a Bi-based oxide having a high Bi content (x ≥ 0.8) is doped with a group II element such as Ca, a crystal structure of the oxide is changed to an orthorhombic. When such a Bi-based oxide containing the group II element is further slightly doped with Ta and/or Nb, a fluorite structure favorable for ion conduction is stabilized.

Nb and Ta each act as a donor ion and thus decrease the amount of oxygen deficiency and reduce ion conductivity. On the other hand, the group II element acts as an acceptor. Simultaneous doping of Nb and/or Ta and the group II element therefore increases the amount of oxygen deficiency while the fluorite structure is maintained, leading to improvement in ion conductivity.

A Bi-based oxide having a low Bi content (x ≤ 0.4) may have a Bi layered compound structure. In such a case, when the oxide is simultaneously doped with Ta, Nb, and the group II element while Ta is partially replaced with another element such as Zr or Ga, the oxide also exhibits high ion conductivity.

### [Examples]

### (Examples 1 to 4 and Comparative Example 1)

### [1. Sample Preparation]

### [1.1. Bi-based Oxide (Examples 1 to 4)]

### [1.1.1. Preparation of Library Film]

A library of Bi-based oxide thin films was prepared by a chemical solution method such that compositions of the thin films were sequentially varied, and ion conductivity of each composition was evaluated for screening for a promising composition. Solutions were prepared by dissolving various metal salts in xylene or butyl acetate and used as raw materials . The respective raw materials were weighed on a microplate to obtain a desired composition and then shaken and stirred to produce a precursor solution.

A surface of an alumina substrate 30 mm long and 30 mm wide was subjected to pretreatment, i.e., plasma surface treatment. A 30-mm long and 30-mm wide metal mask made of stainless steel, in which 3-mm long and 3-mm wide holes were opened in a 6 × 6 matrix at a 2-mm interval, was attached to the alumina substrate with an adhesive. The above precursor solutions having different compositions were dropped in order onto the alumina substrate through the metal mask and dried at 50 to 200°C. The substrate was then baked at 600 to 1000°C in an electric furnace.

With the above steps as one cycle, film formation was performed 6 to 10 cycles to adjust a final thickness to 1 µm, so that a library was prepared such that 6 × 6 = 36 Bi-based oxide films were placed on one substrate. The Bi content of the Bi-based oxide (Biₓ(Nb_{1-a-b}TaₐA_{b})_{1-x-c}B_{c}O₅) was adjusted to 80% (Example 1), 60% (Example 2), 40% (Example 3), or 20% (Example 4).

### [1.1.2. Electrode Preparation]

Thickness of the library film was measured by a thickness meter, and then a mask was placed on the library film such that an interelectrode distance was 0.5 mm on the film, and a Pt electrode film was formed using a sputter system.

### [1.2. YSZ (Comparative Example 1)]

An yttria-stabilized zirconia (YSZ, 8 mol% Y₂O₃) film was formed by sputter on an alumina substrate. To meet the same measurement condition as that for the library film, the sputtered film was divided into 6 × 6 pieces 3 mm long and 3 mm wide per substrate as with the library film. Subsequently, a Pt electrode film was formed in the same way as in Examples 1 to 4.

### [2. Test Method]

The substrate having the oxide film thereon was placed on the hot plate and heated to 500 to 800°C in a nitrogen atmosphere. In such a state, a probe electrode connected to an impedance analyzer was applied onto the Pt electrode to perform AC impedance measurement of the oxide film.

The resultant impedance values, thicknesses, and interelectrode distances were used to calculate ion conductivity of the oxide films having the respective compositions at various temperatures.

### [3. Results]

### [3.1. Ion Conductivity of YSZ (Comparative Example 1)]

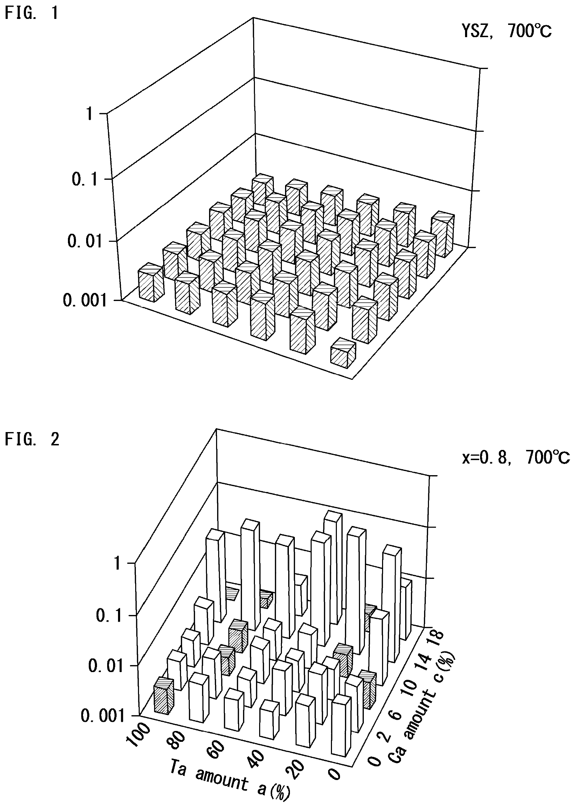

FIG. 1 shows ion conductivity at 700°C of yttria-stabilized zirconia (8 mol% Y₂O₃). Ion conductivity was 3.5 × 10⁻³ S/cm on average at 700°C while slight error was seen depending on divided positions.

### [3.2. Ion Conductivity of Bi-based Oxide]

FIGS. 2 to 6 each show composition dependence of ion conductivity at 700°C or 600°C of Biₓ(Nb_{1-a-b}TaₐA_{b})_{1-x-c}B_{c}O_{δ}. Since the film thickness is 1 µm, the measurable value of the ion conductivity is at least 1 × 10⁻³ S/cm. In FIGS. 2 to 6, a composition with low ion conductivity compared with the comparative example 1 is shown by a hatched bar chart. FIGS. 2 to 6 reveal a tendency that a composition having a higher Bi content (x) shows higher ion conductivity.

### [3.2.1. Ion Conductivity of Sample of x = 0.8 (Example 1)]

FIG. 2 shows composition dependence of ion conductivity at 700°C of Biₓ(Nb_{1-a-b}TaₐA_{b})_{1-x-c}B_{c}O₅, where x = 0.8 (Bi: 80 at%). In the case of the Bi content (x) fixed to x = 0.8, high ion conductivity of at least 1 × 10⁻³ S/cm at 700°C was shown in any of the compositions. In this composition system, ion conductivity higher than that of YSZ was shown at 700°C in many compositions of Bi-Ca-Nb-Ta quaternary oxide.

In a composition range of a Ca doping amount (c) of 14% or more, ion conductivity was high in a composition range of Ta substitution amount (a) of 0 < a ≤ 0.8, and was specifically higher than 1 × 10⁻¹ S/cm in a composition of a = 0.4.

From XRD measurement, a fluorite structure similar to that of stabilized zirconia was stably formed in a composition range of 0.14 < c. In a phase diagram, the fluorite structure is typically not stable in that composition range when the oxide is merely subjected to Ca substitution. However, the fluorite structure was stabilized by doping of Nb and Ta in addition to Ca, and ion conductivity was improved.

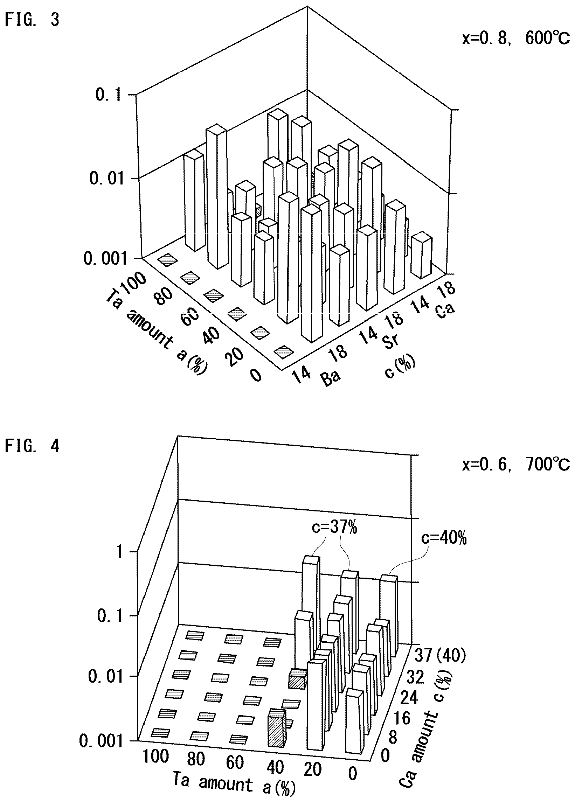

FIG. 3 shows composition dependence of ion conductivity at 600°C of Biₓ(Nb_{1-a-b}TaₐA_{b})_{1-x-c}B_{c}O_{δ}, where x = 0.8 (Bi : 80 at%) . A composition of c = 0.14 or 0.18 and B = Ca, Sr, or Ba was further simultaneously doped with Nb and Ta, so that the fluorite structure was stabilized, and ion conductivity was improved. In this composition system, ion conductivity was higher than the ion conductivity of YSZ, 3.5 × 10⁻³ S/cm, even at 600°C in a wide composition range.

However, for a Ba-contained system, ion conductivity was lower than the measurable limit in the case of c = 0.14.

### [3.2.2. Ion Conductivity of Sample of x = 0.6 (Example 2)]

FIG. 4 shows composition dependence of ion conductivity at 700°C of Biₓ(Nb_{1-a-b}TaₐA_{b})_{1-x-c}B_{c}O_{δ}, where x = 0.6 (Bi : 60 at%) . In a composition system of the Bi content (x) of 0.6, high ion conductivity of at least 1 × 10⁻³ S/cm at 700°C was shown in most compositions in a composition range of the Ta content (a) of 0.4 or less. Specifically, ion conductivity was overall high in a composition of a = 0.2, and high ion conductivity was maintained within a range of 0 < a ≤ 0.4 in a composition of c = 0.37.

### [3.2.3. Ion Conductivity of Sample of x = 0.4 (Example 3)]

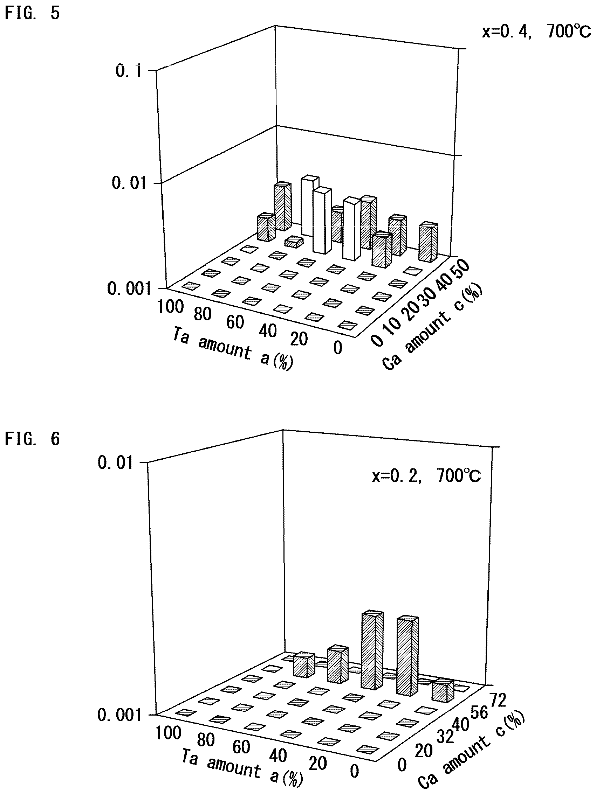

FIG. 5 shows composition dependence of ion conductivity at 700°C of Biₓ(Nb_{1-a-b}TaₐA_{b})_{1-x-c}B_{c}O_{δ}, where x = 0.4 (Bi: 40 at%) . In a composition system of the Bi content (x) of 0.4, high ion conductivity of at least 1 × 10⁻³ S/cm at 700°C was shown in a composition range of 0.4 ≤ c. Specifically, ion conductivity was higher than that of YSZ in a composition range of 0.4 ≤ a ≤ 0.8.

In this case, ion conductivity was equal to or lower than the measurable limit in a composition range of c < 0.4. However, in the case where a bulk sample was produced in a composition of c = 0.2 having a bismuth layered compound structure, when Nb and Ta were partially replaced with other elements such as Zr and Ga, a tendency of slight improvement in ion conductivity was shown. Such a compound has been used as a ferroelectric material but has not been known as an ion conductor. Further, in a composition where Bi was excessively added to the above composition, ion conductivity was improved to at least 1 × 10⁻³ S/cm at 700°C.

### [3.2.4. Ion Conductivity of Sample of x = 0.2 (Example 4)]

FIG. 6 shows composition dependence of ion conductivity at 700°C of Biₓ(Nb_{1-a-b}TaₐA_{b})_{1-x-c}B_{c}O_{δ}, where x = 0.2 (Bi: 20 at%) . In a composition system of the Bi content (x) of 0.2, high ion conductivity of at least 1 × 10⁻³ S/cm at 700°C was also shown in a composition of the Ca amount of 56%. In this case, ion conductivity was also improved by simultaneous doping of Nb and Ta.

### (Example 5)

### [1. Sample Preparation]

Various Bi-based oxides (samples No. 1 to No. 7) containing Ta and/or Nb were prepared in the same way as in Example 1.

### [2. Test Method and Results]

Ion conductivity at 700°C of each of the Bi-based oxides was measured as in Example 1. Table 1 shows the results, revealing the following.
(1) Any of the samples No. 1 to No. 7 served as an ion conductor. Each sample, which is a Bi layered compound, has been used as a ferroelectric material but has not been known as an ion conductor.
(2) Replacement of some of Ta sites with Zr improved ion conductivity (samples No. 1 and No. 2).
(3) Replacement of Ca sites with Ba increased ion conductivity (samples No. 1 and No. 7).
(4) Sr-contained system exhibited high ion conductivity of more than 10⁻³ S/cm (samples No. 3 to No. 6).
(5) Replacement of part of Nb with Ga slightly improved ion conductivity (samples No. 3 and No. 4).
(6) Replacement of some of Ta sites with Zr improved ion conductivity (samples No. 5 and No. 6).

**[Table 1]**

| No. | Composition | Ion conductivity @700°C(S/cm) |
|---|---|---|
| 1 | CaTa₂Bi₂0₉ | 5. 2×10⁻⁵ |
| 2 | CaTa_{1.8}Zr_{0.2}Bi₂0₉ | 7.9 × 10⁻⁵ |
| 3 | SrNb₂Bi₂0₉ | 1.2 × 10⁻³ |
| 4 | SrNb_{1.8}Ga_{0.2}Bi₂0₉ | 1.3 × 10⁻³ |
| 5 | SrTa₂Bi₂0₉ | 1.9 × 10⁻³ |
| 6 | SrTa_{1.8}Zr_{0.2}Bi₂0₃ | 5.6 × 10⁻³ |
| 7 | BaNb₂Bi₂0₉ | 9. 6 × 10⁻⁴ |

Although the embodiment of the present invention has been described in detail hereinbefore, the present invention is not limited thereto, and various modifications may be made within the scope without departing from the gist of the invention.

The oxide ion conductor according to the present invention can be used as a solid electrolyte used for various devices such as a solid-oxide fuel cell (SOFC), an oxygen gas sensor, and an exhaust gas purification element.

## Claims

1. An oxide ion conductor comprising an oxide having a composition expressed by Formula (1)
Biₓ(Nb_{1-a-b}TaₐA_{b})_{1-x-c}B_{c}O_{δ} ··· (1)
where
A is at least one element selected from a group consisting of Ti, Zr, and Ga,
B is one or at least two of group II elements,
0 < x ≤ 0.8, 0 ≤ a ≤ 1.0, 0 ≤ b ≤ 0.1, and 0 < c < 0.8 are satisfied, and
δ is a value securing electrical neutrality.

2. The oxide ion conductor according to claim 1, wherein 0.2 ≤ x ≤ 0.8, 0 < a < 1.0, 0 ≤ b ≤ 0.1, and 0.1 ≤ c ≤ 0.6 are satisfied.

3. The oxide ion conductor according to claim 1, wherein 0.6 < x ≤ 0.8, 0 < a < 1.0, b = 0, and 0 < c < 0.2 are satisfied.

4. The oxide ion conductor according to claim 1, wherein 0.4 < x ≤ 0.6, 0 < a ≤ 0.5, b = 0, and 0 < c < 0.4 are satisfied.

5. The oxide ion conductor according to claim 1, wherein 0.2<x≤0.4, 0.2<a≤0.8, b=0, and 0.3<c≤0.5 are satisfied.

6. The oxide ion conductor according to claim 1, wherein 0 < x ≤ 0.2, 0 < a ≤ 0.8, b = 0, and 0.4 < c < 0.72 are satisfied.

7. The oxide ion conductor according to any one of claims 1 to 3, wherein the oxide ion conductor has a fluorite structure.

8. The oxide ion conductor according to claim 1, wherein 0.4<x≤0.44, 0≤a≤0.8, 0<b≤0. 04, and c = 0.2 are satisfied, and
the oxide ion conductor has a Bi layered oxide structure.

9. The oxide ion conductor according to any one of claims 1 to 8, wherein ion conductivity at 700°C is at least 1 × 10⁻³ S/cm.

10. The oxide ion conductor according to any one of claims 1 to 9, wherein ion conductivity at 700°C or lower is higher than that of ZrO₂ containing 8 mol% Y₂O₃.

11. An electrochemical device including the oxide ion conductor according to any one of claims 1 to 10.
